# EUROPÄISCHE PATENTANMELDUNG

(11) **EP 1 923 588 A1**
(43) Veröffentlichungstag der Anmeldung: **21.05.2008**
(21) Anmeldenummer: 06023816.9
(22) Anmeldetag: 16.11.2006
(51) Int. Cl.: F16D 3/72

(54) **Balgkupplung**

(71) Anmelder: Gerwah GmbH, 63868 Grosswallstadt (DE)
(72) Erfinder: Schüssler, Philipp, 63785 Obernburg (DE)
(74) Vertreter: Köster, Hajo

(57) **Zusammenfassung**

Die Erfindung betrifft eine Balgkupplung (1) zur spielfreien Drehmomentübertragung mit zwei Kupplungsnaben (3,4) aus Metall, insbesondere Aluminium, Kunststoff oder Keramik, und einem dazwischen angeordneten, federelastischen Balg (2), dessen beide am Ende befindlichen ringförmigen Balgborde (5,6) in eine umlaufende, axial zum Balg (2) offene, zwischen einer äußeren (9) und einer inneren (10) umlaufenden Seitenwand der dazugehörigen Kupplungsnabe (3,4) angeordneten Ringnut (7,8) eingreifen und dort mit der Kupplungsnabe (3,4) verbunden sind. Diese Balgkupplung (1) zeichnet sich dadurch aus, dass die Balgborde (5,6) auf dem Umfang verteilt angeordnete, nach radial innen und/oder nach radial außen gerichtete, vorzugsweise axial verlaufende Ausbuchtungen (16,17) besitzen,
dass in einer oder in beiden der umlaufenden Seitenwände (9,10) der Ringnuten (7,8) Erhebungen (19), die in gegenüberliegenden Ausbuchtungen (16,17) des dazugehörigen Balgbordes (5,6) zu liegen kommen, und/oder Vertiefungen (18), in die gegenüberliegende Ausbuchtungen (16,17) des dazugehörigen Balgbordes (5,6) zu liegen kommen, vorgesehen sind, und
dass entweder die Balgborde (5,6) mittels eines in der Ringnut (7,8) befindlichen Elastomers mit der Kupplungsnabe (3,4) verklebt sind oder die äußere Seitenwand (9) nach radial innen mit dem Balgbord (5,6) verpresst ist.

## Beschreibung

Die Erfindung betrifft eine Balgkupplung zur spielfreien Drehmomentübertragung mit zwei Kupplungsnaben aus Metall, insbesondere Aluminium, Kunststoff oder Keramik, und einem dazwischen angeordneten, federelastischen Balg, dessen beide am Ende befindlichen ringförmigen Balgborde in eine umlaufende, axial zum Balg offene, zwischen einer äußeren und einer inneren umlaufenden Seitenwand der dazugehörigen Kupplungsnabe angeordneten Ringnut eingreifen und dort mit der Kupplungsnabe verbunden sind.

Balgkupplungen der hier in Rede stehenden Art dienen üblicherweise zum Verbinden nicht genau fluchtender Wellen oder anderer An- oder Abtriebselemente mit einem federelastischen Balg, insbesondere Metallbalg, der ein- oder mehrwandig ausgestaltet sein kann.

Unter einer Kupplungsnabe werden im Rahmen der vorliegenden Unterlagen übrigens alle Elemente umfasst, die zum Verbinden des Balgs mit einem Antrieb oder Abtrieb geeignet sind.

Bei derartigen Kupplungen stellt die Verbindung zwischen dem Mantel des Balges und der Kupplungsnabe eine kritischen Punkt dar. Aus der DE-A 36 39 092 ist beispielsweise bekannt, eine aus Metall bestehende Kupplungsnabe mit dem Mantel durch Verschweißen zu verbinden oder den Mantel außen auf die Kupplungsnabe aufzukleben. Zudem wird dort empfohlen, die Kupplungsnabe mit einer sich in axialer Richtung des Balges erstreckenden Ringnut zu versehen, in welche die Enden des Balges und somit der sog. Balgbord eingesteckt und beidseitig verklebt ist.

Aus der DE-A 40 31 486 ist eine Metallbalgkupplung der hier in Rede stehenden Art mit einer Ringnut bekannt, in die der Metallbalg eingesteckt wird. Durch Vormontage eines außen angebrachten Befestigungsringes wird diese Ringnut gebildet, die dann mit Klebstoff gefüllt wird. Der Balgbord wird dann in diese Ringnut gesteckt, um die Verbindung zwischen dem Balg und der Kupplungsnabe herzustellen.

Eine Metallbalgkupplung zur Drehmomentübertragung mit einer axial zum Metallbalg offenen Ringnut in der dazugehörigen Kupplungsnabe ist ferner aus der DE-A 198 32 321 bekannt. Der Metallbalg ist mit einem Balgbord ausgestattet, der in die Ringnut eingesetzt und dort mittels eines Elastomers mit der Kupplungsnabe verbunden wird.

Viele dieser bekannten gattungsgemäßen Kupplungen sind nur aufwändig herstellbar. Auch die Dauerhaftigkeit der Verbindung zwischen Balg und Kupplungsnabe beeinträchtigt häufig die Lebensdauer derartiger bekannter Kupplungen.

Aufgabe der vorliegenden Erfindung ist es, eine Balgkupplung zur spielfreien Drehmomentübertragung bereitzustellen, die einfach und schnell herzustellen ist und bei der die Verbindung zwischen Kupplungsnabe und Balg dauerhaft und zuverlässig ist.

Gelöst wird diese Aufgabe durch eine Balgkupplung gemäß der Lehre der Ansprüche.

Bei der erfindungsgemäßen Balgkupplung sind die beiden Balgborde, die auch als flachringförmige Enden bezeichnet werden können, des Balges in denjenigen Raum eingesteckt, der von der in der Kupplungsnabe ausgenommenen Ringnut eingeschlossen wird. Diese Ringnut ist dabei in Richtung des Balges offen und U-förmig ausgebildet. Mit anderen Worten, die Ringnut besitzt, bezogen auf die Längsachse, die Form eines liegenden U's. Der radial äußere, umlaufende Seitenschenkel dieser U-Form wird hier als äußere umlaufende Seitenwand bezeichnet, während der radial innenliegende Seitenschenkel dieser U-Form hier als innere umlaufende Seitenwand bezeichnet wird.

Die erfindungsgemäße Balgkupplung zeichnet sich nun u. a. dadurch aus, dass die Balgborde des Balges mit Ausbuchtungen versehen sind, die auf dem Umfang des Balgbordes verteilt angeordnet sind. Diese Ausbuchtungen können dabei entweder ausschließlich nach radial innen oder ausschließlich nach radial außen gerichtet sein. Auch ist es möglich, dass einige Ausbuchtungen nach radial innen und die anderen Ausbuchtungen nach radial außen gerichtet sind. Zudem verlaufen diese Ausbuchtungen vorzugsweise in axialer Richtung.

Anders ausgedrückt, die Balgborde sind in den Umlaufrichtungen betrachtet vorzugsweise wellenförmig ausgestattet, wobei die Wellenberge entweder nach radial außen oder nach radial innen oder sowohl nach radial außen als auch nach radial innen zeigen. Die Wellentäler verlaufen dabei parallel zur Längsachse bzw. achsparallel.

Es ist auch möglich, dem Balgbord in Umlaufrichtung die Form einer Welle und insbesondere einer Sinuswelle zu geben.

Die erfindungsgemäße Balgkupplung zeichnet sich ferner dadurch aus, dass entweder in einer oder in beiden der umlaufenden Seitenwände der Ringnuten auf dem Umfang verteilte Erhebungen und/oder Vertiefungen vorgesehen sind. Die Erhebungen kommen in gegenüberliegenden Ausbuchtungen des dazugehörigen Balgbordes zu liegen, während in den Vertiefungen gegenüberliegende Ausbuchtungen des dazugehörigen Balgbordes zu liegen kommen. Auch die Vertiefungen und Erhebungen sind zweckmäßigerweise achsparallel ausgerichtet. Mit anderen Worten, die Erhebungen stellen eine Art Rippen dar, während die Vertiefungen eine Art Nuten bzw. Rillen darstellen. Beim Zusammenbauen der erfindungsgemäßen Balgkupplung wird der Balg mit seinen Balgborden in die dazugehörigen Ringnuten in den Kupplungsnaben eingesteckt. Dafür müssen natürlich die Ausbuchtungen einerseits und die Erhebungen/Vertiefungen in etwa formkomplementär ausgestattet sowie derart angeordnet sein, dass ein Ineinanderstecken möglich ist. Die Maßnahmen, die dafür zu ergreifen sind, sind einem Fachmann gut bekannt.

Durch das Einstecken der Balgborde in die Ringnuten ergibt sich eine gewisse Verzahnung bzw. formschlüssige Verbindung zwischen Kupplungsnaben und Balgborden. Allerdings ist diese Verbindung noch nicht spielfrei, da es äußerst schwierig ist, die Balgborde und die Ringnuten der Kupplungsnaben derart auszugestalten, dass die Balgborde passgenau und somit ohne Spiel in die Ringnuten eingreifen. Der Balg kann somit bezüglich der Kupplungsnaben um einen gewissen, kleinen Winkelbetrag um die Längsachse verdreht werden.

Um die Spielfreiheit der erfindungsgemäßen Balgkupplung sicher zu stellen, werden die Balgborde entweder mittels eines Elastomers in der Ringnut mit der dazugehörigen Kupplungsnabe verklebt. Das Elastomer füllt somit den Zwischenraum in der Ringnut zwischen dem Balgbord und den Seitenwänden der Ringnut zumindest teilweise und vorzugsweise vollständig aus. Damit ergibt sich eine Kombination aus einer formschlüssigen und einer stoffschlüssigen Verbindung.

Alternativ wird die Spielfreiheit bei der erfindungsgemäßen Balgkupplung dadurch sichergestellt, dass die äußere Seitenwand der Kupplungsnabe nach radial innen mit dem Balgbord verpresst wird.

Nach einer bevorzugten Ausführungsform entspricht die Zahl der nach radial innen gerichteten Ausbuchtungen der Balgborde der Zahl der Vertiefungen in der radial inneren Seitenwand und der Zahl der Erhebungen der radial äußeren Seitenwand. Bei einer bevorzugten alternativen Ausführungsform entspricht die Zahl der nach radial außen gerichteten Ausbuchtungen der Balgborde der Zahl der Vertiefungen in der radial äußeren Seitenwand und der Zahl der Erhebungen der radial inneren Seitenwand. Nach einer weiterhin bevorzugten Ausführungsform sind pro Ausbuchtung im Balgbord in den gegenüberliegenden Seitenwänden der Ringnut eine Erhebung bzw. eine Vertiefung vorgesehen. Besitzt der Balgbord eine nach radial innen gerichtete Ausbuchtung, dann befindet sich in der Ringnut der dazugehörigen Kupplungsnabe in der radial äußeren Seitenwand eine Erhebung, während in der radial inneren Seitenwand der Ringnut eine Vertiefung vorgesehen ist.

Nach einer weiterhin bevorzugten Ausführungsform sind die Ausbuchtungen der Balgborde gleichmäßig auf dem Umfang verteilt angeordnet. Entsprechendes gilt dann natürlich auch für die Kupplungsnaben, so dass die Erhebungen bzw. Vertiefungen gleichmäßig auf dem Umfang verteilt angeordnet sind.

Die äußere Seitenwand der Kupplungsnabe der erfindungsgemäßen Balgkupplung ragt vorzugsweise in axialer Richtung über die innere Seitenwand hinaus. Beim Verpressen der äußeren Seitenwand nach radial innen wird derjenige Abschnitt der äußeren Seitenwand, der über die innere Seitenwand hinausragt, nach radial innen abgewinkelt und bewirkt eine axiale Sicherung des Balgbordes in der Ringnut.

Die Kupplungsnaben stellen zweckmäßigerweise eine Art Ring mit einer zur Längsachse der Balgkupplung konzentrischen Bohrung dar. Die Kupplungsnaben stellen zweckmäßigerweise auf der von der Balgseite abgewandten Seite eine Klemmbuchse bzw. Klemmnabe dar bzw. sind dort als Klemmbuchse ausgestaltet. Eine derartige Ausgestaltung ist bekannt und beispielsweise in der eingangs genannten DE-A 198 32 321 beschrieben.

In der letztgenannten Druckschrift ist auch beschrieben, wie ein Elastomer in den Zwischenraum zwischen dem Balgbord und der diesen umgebenden Ringnut eingebracht werden kann. Darauf wird hiermit Bezug genommen.

Der Balg der erfindungsgemäßen Balgkupplung wird zweckmäßigerweise aus einem Metall, insbesondere einem Metallblech, gefertigt. Der Balg kann dabei ein- oder mehrwandig ausgestaltet sein.

Aufgrund der Ausgestaltung von Balgbord und Kupplungsnabe ist die erfindungsgemäße Balgkupplung äußerst universell einsetzbar und leicht herstellbar.

So kann beispielsweise ein Balg mit unterschiedlich dimensionierten Kupplungsnaben verbunden werden. Es ist lediglich erforderlich, den Durchmesser der Ringnut in der Kupplungsnabe derart zu bemessen, dass er im Wesentlichen dem Durchmesser des Balgbordes entspricht.

Zur Herstellung der spielfreien Verbindung wird nach dem Einsetzen des Balgbordes in die dazugehörige Ringnut entweder ein Elastomer in die Ringnut eingebracht oder die geschilderte Verpressung vorgenommen. Diese Maßnahmen müssen nicht unbedingt in der Herstellungsstätte von Kupplungsnabe bzw. Balg vorgenommen werden. Vielmehr ist es möglich, entsprechend den Kundenwünschen Kupplungsnabe und Balg auszusuchen und an einen anderen Ort als die Herstellungsstätte zu versenden und dort die beschriebene Verbindung vorzunehmen.

Gegenstand der Erfindung ist somit auch der beschriebene Balg als solcher bzw. die beschriebene Kupplungsnabe als solche.

Die erfindungsgemäße Balgkupplung wird anhand der beiliegenden Zeichnungen näher erläutert, welche bevorzugte Ausführungsformen darstellen und nicht maßstabsgerecht sind. Von den Figuren zeigen dabei:
- Fig. 1: eine erfindungsgemäße Balgkupplung in perspektivischer Ansicht,
- Fig. 2: eine Längsschnittansicht der in der Figur 1 gezeigten Balgkupplung,
- Fig. 3: eine perspektivische Ansicht des Balges der in der Figur 1 gezeigten Balgkupplung,
- Fig. 4: eine Aufsicht in Axialrichtung auf den in der Figur 3 gezeigten Balg,
- Fig. 5: die Detailansicht A gemäß Figur 4,

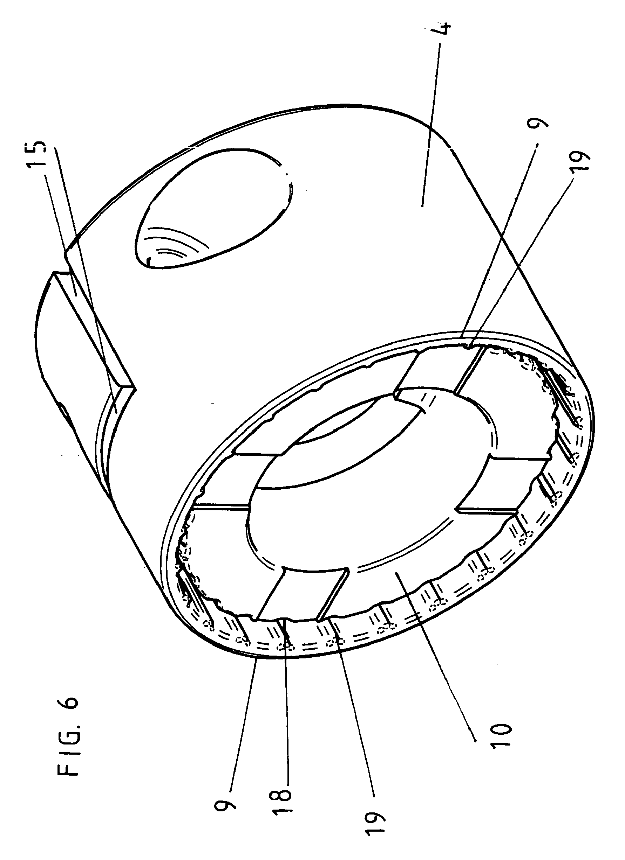

- Fig. 6: eine perspektivische Ansicht der in der Figur 1 rechts gezeigten Kupplungsnabe der Balgkupplung gemäß Figur 1,
- Fig. 7: eine Schnittansicht gemäß D-D in Figur 2,
- Fig. 8: die Detailansicht C gemäß Figur 7,
- Fig. 9: die Detailansicht B vor dem Verpressen gemäß Fig. 2 und
- Fig. 10: eine der Detailansicht B gemäß Fig. 9 entsprechende Detailansicht nach dem Verpressen.

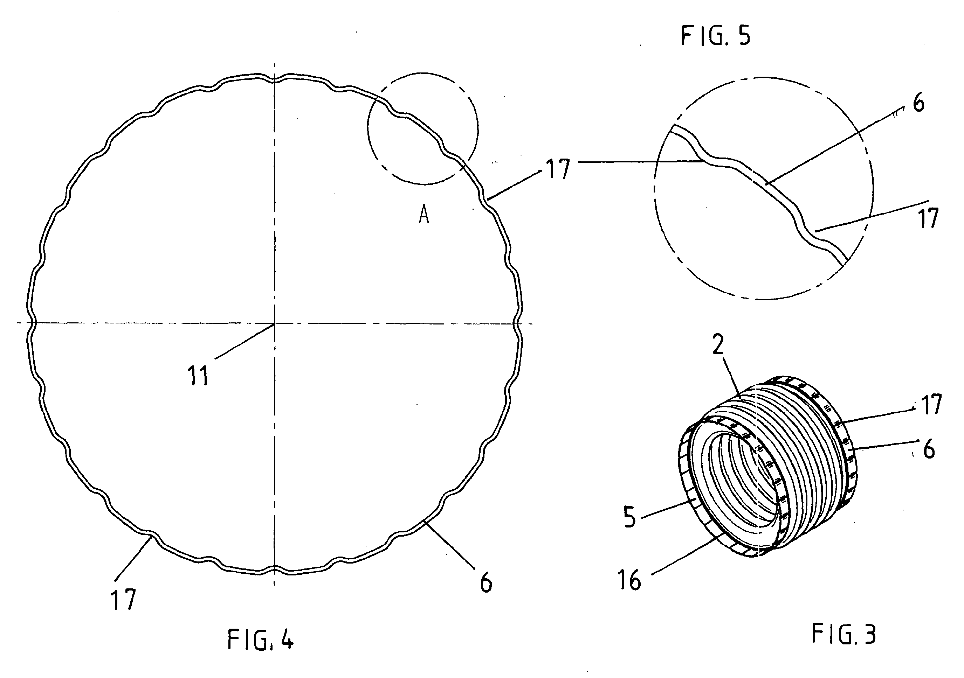

Die in der Figur 1 perspektivisch dargestellte Balgkupplung 1 besitzt zwei endständige Kupplungsnaben 3, 4, zwischen denen ein Balg aus Metall angeordnet ist, der einen Harmonika-artig gefalteten zylindrischen Mantel besitzt, der sich an seinen Enden zylindrisch bzw. in Axialrichtung erstreckt und einen Ring, den sog. Balgbord 5 bzw. 6, bildet (man vgl. Figur 3).

Die Kupplungsnaben 3, 4 besitzen eine durchgehende, zur Längsachse 11 konzentrische durchgehende Bohrung 12, 13. Beide Kupplungsnaben 3, 4 sind dabei mit Schlitzen 14, 15 ausgestattet, um es zu ermöglichen, den axial außen liegenden Ring mit Hilfe einer Spannschraube oder ähnlichem auf eine Welle, die in die Kupplungsnaben 3, 4 eingesetzt ist, zusammendrücken zu können. Die gezeigten Kupplungsnaben stellen daher Klemmnaben dar und sind bekannter und üblicher Art.

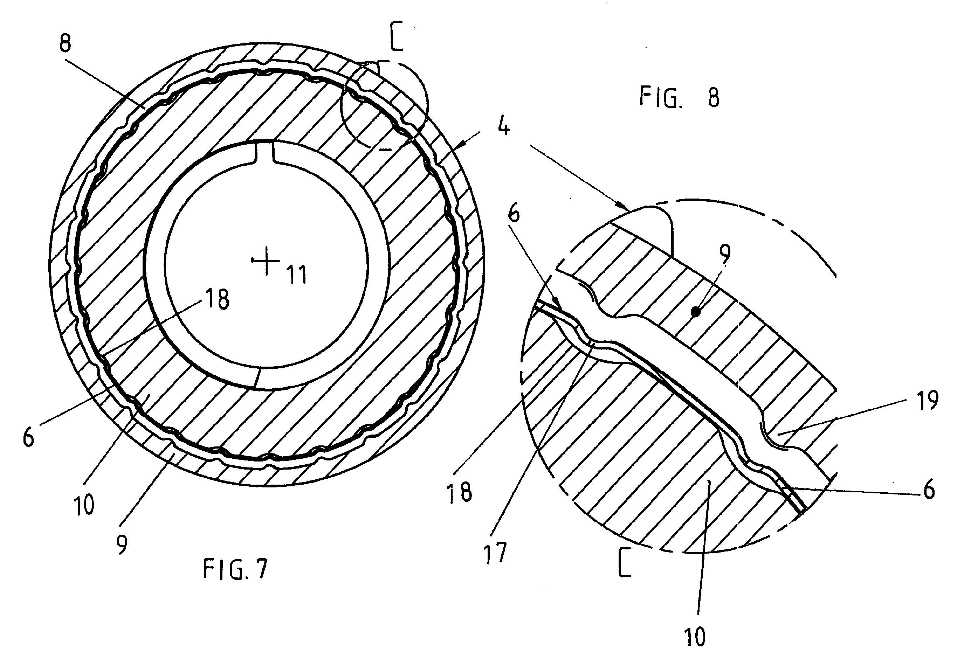

Wie insbesondere aus den Figuren 2 und 7 ersichtlich ist, sind die Balgborde 5, 6 in eine Ringnut 7 bzw. 8 eingesetzt. Die Ringnut 7, 8 ist dabei in der zum Balg 2 zeigenden Stirnseite der dazugehörigen Kupplungsnabe 3, 4 ausgenommen. Die Ringnuten 7, 8 befinden sich möglichst weit radial außen. Das Profil der Ringnut 7, 8 ist in etwa U-förmig, wobei das U liegend angeordnet ist. Mit anderen Worten, die U-förmigen Ringnuten 7, 8 sind zur balgseitigen Stirnseite der Kupplungsnaben 3, 4 offen.

Die Kupplungsnaben 3, 4 bestehen aus Aluminium und können durch spanabhebende Verfahren hergestellt werden, beispielsweise Drehen und Bohren usw.

Die Balgborde 5, 6 besitzen mehrere, gleichmäßig auf dem Umfang verteilt angeordnete Ausbuchtungen 16 bzw. 17, die nach radial innen zeigen bzw. gerichtet sind. Diese Ausbuchtungen 16, 17 stellen eine Art achsparalleler Rillen bzw. Rinnen dar.

Bei der in den Figuren gezeigten Ausführungsform sind die Ausbuchtungen 16, 17 ausschließlich nach radial innen gerichtet. Natürlich können diese Ausbuchtungen 16, 17 auch ausschließlich nach radial außen gerichtet sein. Auch Mischformen sind möglich, bei denen sich eine nach radial innen gerichtete Ausbuchtung an eine nach radial außen gerichtete Ausbuchtung anschließt und somit in Umlaufrichtung eine Wellenform ergibt. Die in den Zeichnungen gezeigte Ausführungsform der Balgborde 5, 6 kann beispielsweise aus einem zylindrischen Balgbord mit Hilfe eines Rollierwerkzeuges hergestellt werden.

Zum Zusammenbauen der erfindungsgemäßen Balgkupplung 1 wird der in Figuren 3 bis 5 gezeigte Balg 2 mit seinem Balgborden 5, 6 in die Ringnuten 8, 9 der dazugehörigen Kupplungsnaben 3, 4 eingesetzt. Dieser Zustand ist insbesondere in den Figuren 2, 7, 8 und 9 gezeigt. Die Balgborde 6, 7 sind in diesem Zustand noch nicht spielfrei mit den Kupplungsnaben 3, 4 verbunden.

Wie insbesondere aus der Figur 7 ersichtlich ist, liegen den Ausbuchtungen 16 des Balgbordes 6 Vertiefungen 18 in der radial inneren Seitenwand 10 gegenüber. Diese Vertiefungen 18 sind ebenso wie die Ausbuchtungen 16 gleichmäßig auf dem Umfang verteilt angeordnet. Genau genommen befinden sich die Vertiefungen 18 in der Seitenwandfläche der Seitenwand 8. Der Einfachheit halber wird dies hier jedoch unter Bezug auf die Seitenwand dargestellt.

Den Ausbuchtungen 17 sind radial außen gegenüberliegend Erhebungen 19 in der radial äußeren Seitenwand 9 der Kupplungsnabe 4 angebracht, die ebenfalls gleichmäßig verteilt auf dem Umfang angeordnet sind. Diese Erhebungen 19 sind nach radial innen ausgerichtet und stellen achsparallele Rippen dar.

Die Zahl der Ausbuchtungen 16 entspricht dabei der Zahl der Vertiefungen 18 und auch der Zahl der Erhebungen 19.

Wie man insbesondere aus der Figur 8 ersieht, kann der Balgbord 6 um einen gewissen Winkelbetrag bezüglich der radial inneren Seitenwand 10 gedreht werden, bevor die Ausbuchtungen 16, die sich in etwa mittig in den Vertiefungen 18 befinden, gegen die Seitenwände dieser Vertiefungen in Anlage kommen und ein weiteres Verdrehen verhindern.

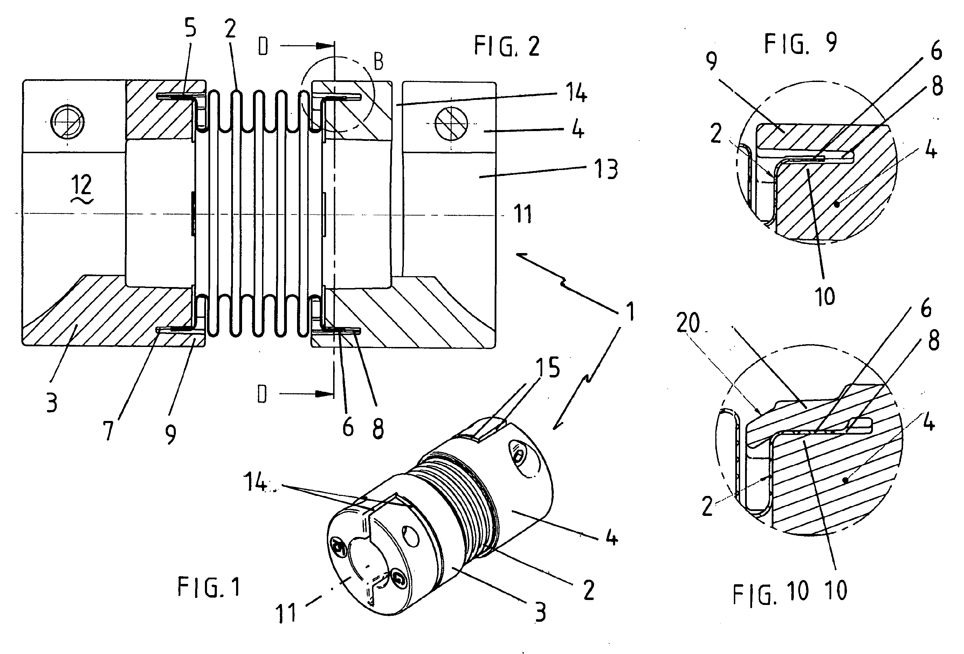

Um die Verbindung zwischen Balgborden 5, 6 und Kupplungsnaben 3, 4 spielfrei auszugestalten, wird die radial äußere Seitenwand 9 der Ringnuten 7, 8 nach radial innen verpresst. Die sich dabei ergebende Verformung wird insbesondere aus den Figuren 9 und 10 ersichtlich. Bei dem in der Figur 9 gezeigten Zustand hat noch keine Verpressung stattgefunden. Nach der Verpressung ergibt sich der in der Figur 10 gezeigte Zustand. Die radial äußere Seitenwand 9 ist nach radial innen verpresst bzw. verschoben; der Balgbord 6 ist zwischen den beiden Seitenwänden 9, 10 verpresst. Die Ausbuchtungen 16 einerseits und die Vertiefungen 18 bzw. Erhebungen 19 andererseits schmiegen sich im Laufe des Verpressvorganges aneinander an, so dass eine spielfreie Verbindung hergestellt wird.

Der nach axial innen zeigende, freie Rand 20, der nach axial innen über die innere Seitenwand 10 hinausragt, ist nach radial innen abgewinkelt und bewirkt eine axiale Sicherung des Balgbordes 6.

### BEZUGSZEICHENLISTE

- 1: Balgkupplung
- 2: Balg
- 3: Kupplungsnabe
- 4: Kupplungsnabe
- 5: Balgbord
- 6: Balgbord
- 7: Ringnut
- 8: Ringut
- 9: radial äußere Seitenwand
- 10: radial innere Seitenwand
- 11: Längsachse
- 12: durchgehende Bohrung
- 13: durchgehende Bohrung
- 14: Schlitz
- 15: Schlitz
- 16: Ausbuchtung
- 17: Ausbuchtung
- 18: Vertiefung
- 19: Erhebung
- 20: freier Rand

## Patentansprüche

1. Balgkupplung (1) zur spielfreien Drehmomentübertragung mit zwei Kupplungsnaben (3,4) aus Metall, insbesondere Aluminium, Kunststoff oder Keramik, und einem dazwischen angeordneten, federelastischen Balg (2), dessen beide am Ende befindlichen ringförmigen Balgborde (5,6) in eine umlaufende, axial zum Balg (2) offene, zwischen einer äußeren (9) und einer inneren (10) umlaufenden Seitenwand der dazugehörigen Kupplungsnabe (3,4) angeordneten Ringnut (7,8) eingreifen und dort mit der Kupplungsnabe (3,4) verbunden sind,
**dadurch gekennzeichnet,**
**dass** die Balgborde (5,6) auf dem Umfang verteilt angeordnete, nach radial innen und/oder nach radial außen gerichtete Ausbuchtungen (16,17) besitzen,
**dass** in einer oder in beiden der umlaufenden Seitenwände (9,10) der Ringnuten (7,8) Erhebungen (19), die in gegenüberliegenden Ausbuchtungen (16,17) des dazugehörigen Balgbordes (5,6) zu liegen kommen, und/oder Vertiefungen (18), in die gegenüberliegende Ausbuchtungen (16,17) des dazugehörigen Balgbordes (5,6) zu liegen kommen, vorgesehen sind, und
**dass** entweder die Balgborde (5,6) mittels eines in der Ringnut (7,8) befindlichen Elastomers mit der Kupplungsnabe (3,4) verklebt sind oder die äußere Seitenwand (9) nach radial innen mit dem Balgbord (5,6) verpresst ist.

2. Balgkupplung nach Anspruch 1,
**dadurch gekennzeichnet**,
die Zahl der nach radial innen gerichteten Ausbuchtungen (16,17) der Balgborde (5,6) der Zahl der Vertiefungen (18) in der radial inneren Seitenwand (10) und der Zahl der Erhebungen (19) der radial äußeren Seitenwand (9) entspricht und/oder
die Zahl der nach radial außen gerichteten Ausbuchtungen (16,17) der Balgborde (5,6) der Zahl der Vertiefungen (18) in der radial äußeren Seitenwand (9) und der Zahl der Erhebungen (19) der radial inneren Seitenwand (10) entspricht.

3. Balgkupplung nach Anspruch 1 oder 2,
**dadurch gekennzeichnet**,
die Ausbuchtungen (16,17) der Balgborde (5,6) gleichmäßig auf dem Umfang verteilt angeordnet sind.

4. Balgkupplung nach einem der vorhergehenden Ansprüche
**dadurch gekennzeichnet,dass**
sich die Ausbuchtungen (16, 17), die Vertiefungen (18) und die Erhebungen (19) achsparallel erstrecken.

5. Balgkupplung nach einem der vorhergehenden Ansprüche,
**dadurch gekennzeichnet,dass**
die äußere Seitenwand (9) in axialer Richtung über die innere Seitenwand (10) hinausragt und nach dem Verpressen nach radial innen abgewinkelt ist.

6. Balgkupplung nach einem der vorhergehenden Ansprüche,
**dadurch gekennzeichnet,dass**
der Balg (2) aus einem Metall gefertigt ist.

7. Balg mit den Merkmalen gemäß Anspruch 1 sowie gegebenenfalls mindestens einem der Merkmale gemäß den Ansprüchen 2 bis 6.

8. Kupplungsnabe mit den Merkmalen gemäß Anspruch 1 sowie gegebenenfalls mindestens einem der Merkmale gemäß den Ansprüchen 2 bis 6.
